# EUROPÄISCHE PATENTSCHRIFT

(11) **EP 3 912 260 B1**
(45) Veröffentlichungstag und Bekanntmachung des Hinweises auf die Patenterteilung: **02.09.2026**
(21) Anmeldenummer: 20706996.4
(22) Anmeldetag: 17.02.2020
(51) Int. Cl.: H02K 5/04, H02K 5/20, H02K 9/12, H02K 9/19, H02K 11/20

(54) **GEKAPSELTE ELEKTRISCHE MASCHINE MIT ÄUSSEREM FLÜSSIGKEITSKÜHLKREISLAUF**
ENCAPSULATED ELECTRICAL MACHINE WITH EXTERNAL LIQUID COOLING CIRCUIT
MACHINE ÉLECTRIQUE BLINDÉE À CIRCUIT DE REFROIDISSEMENT DE LIQUIDE EXTÉRIEUR

(30) Priorität: 14.03.2019 EP 19162814
(43) Veröffentlichungstag der Anmeldung: 24.11.2021
(73) Patentinhaber: Innomotics GmbH, 90441 Nürnberg (DE)
(72) Erfinder: MUTZL, Thomas, 94167 Tettenweis (DE); OSTERHOLZER, Thomas, 94149 Kößlarn (DE); STOIBER, Martin, 94081 Fuerstenzell (DE)
(74) Vertreter: Michalski Hüttermann & Partner mbB
(86) Internationale Anmeldenummer: PCT/EP2020/054015
(87) Internationale Veröffentlichungsnummer: WO 2020/182415

(56) Entgegenhaltungen:
- EP-A1- 2 824 806
- WO-A1-2016/008709
- CN-A- 101 938 191
- US-A- 3 457 439
- US-A1- 2009 284 087

## Beschreibung

Die vorliegende Erfindung geht aus von einer elektrischen Maschine,
- wobei die elektrische Maschine einen Rotor und einen Stator aufweist,
- wobei der Rotor um eine Rotationsachse der elektrischen Maschine rotierbar ist,
- wobei um die Rotationsachse herum gesehen der Rotor vom Stator umgeben ist und der Stator von einem äußeren Mantel umgeben ist,
- wobei der äußere Mantel sich in Richtung der Rotationsachse gesehen jeweils von einem vorderen Stirnteil zu einem hinteren Stirnteil erstreckt, so dass das vordere und das hintere Stirnteil und der Stator einen den Rotor enthaltenden Innenbereich begrenzen und das vordere und das hintere Stirnteil, der Stator und der äußere Mantel einen den Innenbereich radial außen umgebenden Außenbereich begrenzen,
- wobei der Innenbereich und der Außenbereich über Ausnehmungen kommunizierend miteinander verbunden sind, so dass Luft aus dem Innenbereich in den Außenbereich und von dort wieder zurück in den Innenbereich strömen kann,
- wobei axial verlaufende Rohre jeweils im vorderen und im hinteren Stirnteil befestigt sind, so dass die axial verlaufenden Rohre sich jeweils vom vorderen Stirnteil über den Außenbereich zum hinteren Stirnteil erstrecken.

Bei manchen Anwendungen müssen die verwendeten elektrischen Maschinen in der Zündschutzart Ex d gekapselt sein. Auch derartige elektrische Maschinen werden jedoch in immer größeren Bauformen benötigt.

Bei größeren Bauformen derartiger elektrischer Maschinen sind die elektrischen Maschinen oftmals so ausgebildet wie obenstehend aufgeführt. Diese elektrischen Maschinen werden mit Luft gekühlt. Zu diesem Zweck ist an eine der beiden Stirnseiten an der von dem äußeren Mantel abgewandten Seite ein Lüfter aufgesetzt, mittels dessen zur Sekundärkühlung Kühlluft durch die axial verlaufenden Rohre geblasen wird.

Luft ist ein vergleichsweise schlechtes Kühlmedium. Besser wäre es, die elektrische Maschine im Rahmen der Sekundärkühlung mit einem flüssigen Kühlmedium - insbesondere Wasser - kühlen zu können.

Eine elektrische Maschine der eingangs genannten Art ist beispielsweise aus der US 3 457 439 A oder der CN 101 938 191 A bekannt. Auch der WO 2016/008 709 A1 ist eine derartige elektrische Maschine zu entnehmen.

Die Aufgabe der vorliegenden Erfindung besteht darin, eine elektrische Maschine der eingangs genannten Art zu schaffen, welche mit einem flüssigen Kühlmedium gekühlt wird.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 10.

Erfindungsgemäß wird eine elektrische Maschine der eingangs genannten Art dadurch ausgestaltet,
- dass auf das vordere und das hintere Stirnteil an ihrer jeweils von dem äußeren Mantel abgewandten Seite flüssigkeitsdicht ein vorderes und ein hinteres Abschlusselement aufgesetzt sind, so dass das vordere Stirnteil und das vordere Abschlusselement einen vorderen und das hintere Stirnteil und das hintere Abschlusselement einen hinteren Hohlraum umschließen,
- dass die axial verlaufenden Rohre im vorderen und hinteren Hohlraum münden,
- dass der vordere Hohlraum mittels einer Trennwand in mindestens zwei Teilbereiche unterteilt ist,
- dass ein Teil der axial verlaufenden Rohre im einem der Teilbereiche und ein anderer Teil der axial verlaufenden Rohre in einem anderen der Teilbereiche mündet,
- dass in dem einen Teilbereich ein Anschluss zum Zuführen des flüssigen Kühlmittels angeordnet ist und
- dass der Anschluss zum Abführen des flüssigen Kühlmediums in dem anderen Teilbereich angeordnet ist. das vordere und das hintere Stirnteil und der äußere Mantel den Rotor und den Stator in der Zündschutzart kapseln.

Die mindestens zwei Teilbereiche sind mittels der Trennwand flüssigkeitsdicht voneinander getrennt sind. Der vordere Hohlraum ist mit Ausnahme der Anschlüsse zum Zuführen und zum Abführen des flüssigen Kühlmediums und der Zugänge zu den axial verlaufenden Rohren flüssigkeitsdicht geschlossen. Der hintere Hohlraum ist mit Ausnahme der Zugänge zu den axial verlaufenden Rohren flüssigkeitsdicht geschlossen.

Erfindungsgemäß kapseln das vordere und das hintere Stirnteil und der äußere Mantel den Rotor und den Stator in der Zündschutzart Ex d. Dadurch ist die elektrische Maschine auch in einer explosionsgefährdeten Umgebung einsetzbar.

Die axial verlaufenden Rohre weisen einen Innendurchmesser und einen Außendurchmesser auf. Vorzugsweise weisen die axial verlaufenden Rohre vom Stator einen jeweiligen radialen Abstand auf, der mindestens so groß wie der Innendurchmesser ist, insbesondere sogar mindestens so groß wie der Außendurchmesser. Dadurch wird auf einfache Weise ein Bereich geschaffen, in dem eine Dichtung zum Abdichten der beiden Abschlusselemente zu den Stirnteilen hin angeordnet werden kann.

Es ist möglich, dass die axial verlaufenden Rohre als doppelwandige Rohre ausgebildet sind, die jeweils ein inneres, das flüssige Kühlmedium führendes Innenrohr und ein das Innenrohr umgebendes und im Außenbereich von der aus dem Innenbereich in den Außenbereich geströmten Luft umströmtes Außenrohr aufweisen. Diese Ausgestaltung ist zwar relativ komplex, bietet aber dafür den Vorteil, dass eine einfache Undichtigkeit eines der Innenrohre nicht zu einer Ansammlung von Flüssigkeit im Innenbereich führen kann.

Alternativ ist es möglich, dass die axial verlaufenden Rohre als einwandige Rohre ausgebildet sind, die innen das flüssige Kühlmedium führen und außen von der aus dem Innenbereich in den Außenbereich geströmten Luft umströmt werden.

In beiden Fällen ist es von Vorteil, wenn im Innenbereich und/oder im Außenbereich eine Detektoreinrichtung zum Erfassen von Flüssigkeit angeordnet ist. Dadurch kann rechtzeitig vor einem durch das flüssige Kühlmedium bewirkten elektrischen Kurzschluss die Gefahr eines derartigen Kurzschlusses bemerkt und davor gewarnt werden bzw. eventuell sogar die elektrische Maschine automatisch abgeschaltet werden.

Vorzugsweise sind die axial verlaufenden Rohre um die Rotationsachse herum gesehen über einen Winkel von mehr als 180° um die Rotationsachse herum verteilt angeordnet. Dadurch kann trotz einer relativ kompakten Bauform eine effiziente Kühlung erreicht werden. In anderen Fällen kann dieser Winkel aber auch unterschritten werden.

Vorzugsweise ist der Stator ohne Abstand von einem inneren Mantel umgeben und weist der innere Mantel einen radialen Abstand vom äußeren Mantel auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine elektrische Maschine,
- FIG 2: einen Schnitt längs einer Linie II-II in FIG 1,
- FIG 3: ein Detail von FIG 1,
- FIG 4: ein einzelnes Rohr,
- FIG 5: ein einzelnes Rohr,
- FIG 6: einen Abschnitt eines äußeren Mantels und
- FIG 7: einen Abschnitt eines inneren Mantels.

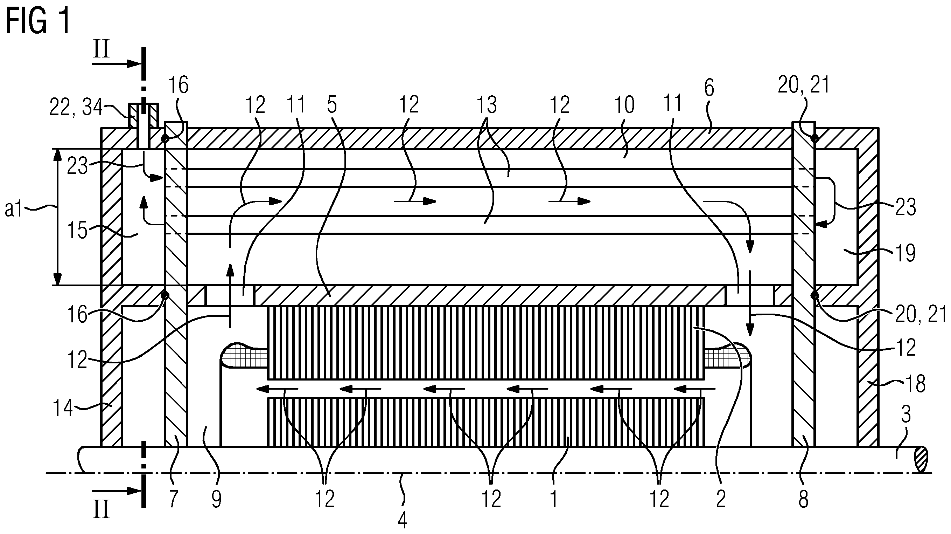

Gemäß FIG 1 weist eine elektrische Maschine einen Rotor 1 und einen Stator 2 auf. Der Rotor 1 ist auf einer Rotorwelle 3 angeordnet, die rotierbar gelagert ist. Die Rotorwelle 3 und mit ihr der Rotor 1 sind dadurch um eine Rotationsachse 4 der elektrischen Maschine rotierbar.

Soweit nachstehend die Begriffe "axial", "radial" und "tangential" verwendet werden, sind sie stets auf die Rotationsachse 4 bezogen. "Axial" ist eine Richtung parallel zur Rotationsachse 4. "Radial" ist eine Richtung orthogonal zur Rotationsachse 4 direkt auf die Rotationsachse 4 zu oder von ihr weg. "Tangential" ist eine Richtung, die sowohl orthogonal zur Axialrichtung als auch orthogonal zur Radialrichtung ist. "Tangential" ist also eine Richtung, die bei einer konstanten Axialposition und in einem konstanten radialen Abstand von der Rotationsachse 4 kreisförmig um die Rotationsachse 4 herum gerichtet ist.

Im Rahmen der vorliegenden Erfindung ist der Stator 2 radial außen angeordnet, der Rotor 1 radial innen. Weiterhin ist der Stator 2 entsprechend der Darstellung in FIG 1 ohne Abstand von einem inneren Mantel 5 umgeben. Dies ist aber nicht zwingend erforderlich. Alternativ könnte der Stator 2 auch nur von mehreren Ringen umgeben sein, wobei zumindest an den beiden axialen Enden des Stators 2 jeweils ein Ring angeordnet ist. Der Stator 2 ist jedoch von einem äußeren Mantel 6 umgeben. Der äußere Mantel 6 weist einen radialen Abstand a1 vom Stator 2 bzw. gegebenenfalls vom inneren Mantel 5 auf.

Der äußere Mantel 6 weist in der Regel eine Zylinderform auf. Gleiches gilt - sofern vorhanden - in der Regel auch für den inneren Mantel 5. Der radiale Abstand a1 ist in Tangentialrichtung gesehen oftmals konstant. Es sind jedoch - sowohl für den äußeren Mantel 6 als auch gegebenenfalls für den inneren Mantel 5 - Abweichungen von der Zylinderform möglich. Auch der radiale Abstand a1 kann damit variieren.

Der äußere Mantel 6 erstreckt sich in Axialrichtung jeweils von einem vorderen Stirnteil 7 zu einem hinteren Stirnteil 8. Die beiden Stirnteile 7, 8 sind in der Regel einstückig ausgebildet oder bestehen jeweils aus mehreren stoffschlüssig miteinander verbundenen Teilen. Die beiden Stirnteile 7, 8 und der Stator 2 bzw. gegebenenfalls der innere Mantel 5 begrenzen einen Innenbereich 9. Der Innenbereich 9 enthält den Rotor 1. Weiterhin begrenzen die beiden Stirnteile 7, 8, der Stator 2 und der äußere Mantel 6 einen Außenbereich 10, der den Innenbereich 9 radial außen umgibt. Vorzugsweise kapseln weiterhin die beiden Stirnteile 7, 8 und der äußere Mantel 6 den Rotor 1 und den Stator 2 in der Zündschutzart Ex d. Der Begriff "Zündschutzart Ex d" hat für den Fachmann eine feste Bedeutung. Entsprechende Realisierungen der Kapselung sind dem Fachmann ebenfalls geläufig.

Der Innenbereich 9 und der Außenbereich 10 sind über Ausnehmungen 11 kommunizierend miteinander verbunden, so dass Luft 12 aus dem Innenbereich 9 in den Außenbereich 10 und von dort wieder zurück in den Innenbereich 9 strömen kann. Sofern der innere Mantel 5 vorhanden ist, können die Ausnehmungen 11 im inneren Mantel 5 vorhanden sein. Die vom Innenbereich 9 in den Außenbereich 10 und zurück strömende Luft 12 bildet einen inneren Kühlkreislauf der elektrischen Maschine.

Der innere Kühlkreislauf ist in der Regel - Ausnahmen sind jedoch prinzipiell möglich - einflutig oder zweiflutig. Bei einem einflutigen inneren Kühlkreislauf ist entsprechend der Darstellung in FIG 1 je eine Ausnehmung 11 in der Nähe der beiden Stirnteile 7, 8 vorhanden. Durch die eine der beiden Ausnehmungen 11 strömt die Luft 12 vom Innenbereich 9 in den Außenbereich 10, durch die andere der beiden Ausnehmungen 11 vom Außenbereich 10 in den Innenbereich 9. Bei einem zweiflutigen inneren Kühlkreislauf (nicht dargestellt, aber ebenso realisierbar) ist zusätzlich eine weitere Ausnehmung 11 in etwa in der Mitte zwischen den beiden Stirnteilen 7, 8 vorhanden. In diesem Fall strömt die Luft 12 durch die beiden Ausnehmungen 11 in der Nähe der beiden Stirnteile 7, 8 vom Außenbereich 10 in den Innenbereich 9 und durch die dazwischen angeordnete Ausnehmung vom Innenbereich 9 in den Außenbereich 10. Diese und gegebenenfalls auch andere Ausgestaltungen des inneren Kühlkreislaufs sind Fachleuten allgemein bekannt. Sie bedürfen daher keiner näheren Erläuterung.

In den beiden Stirnteilen 7, 8 sind weiterhin Rohre 13 befestigt. Die Rohre 13 verlaufen axial. Die Rohre 13 erstrecken sich jeweils vom vorderen Stirnteil 7 über den Außenbereich 10 zum hinteren Stirnteil 8. Die Rohre 13 sind in den Stirnteilen 7, 8 in der Regel derart befestigt, dass sie zerstörungsfrei nicht mehr aus den Stirnteilen 7, 8 herausgelöst werden können. Beispielsweise können sie mit den Stirnteilen 7, 8 geschweißt sein.

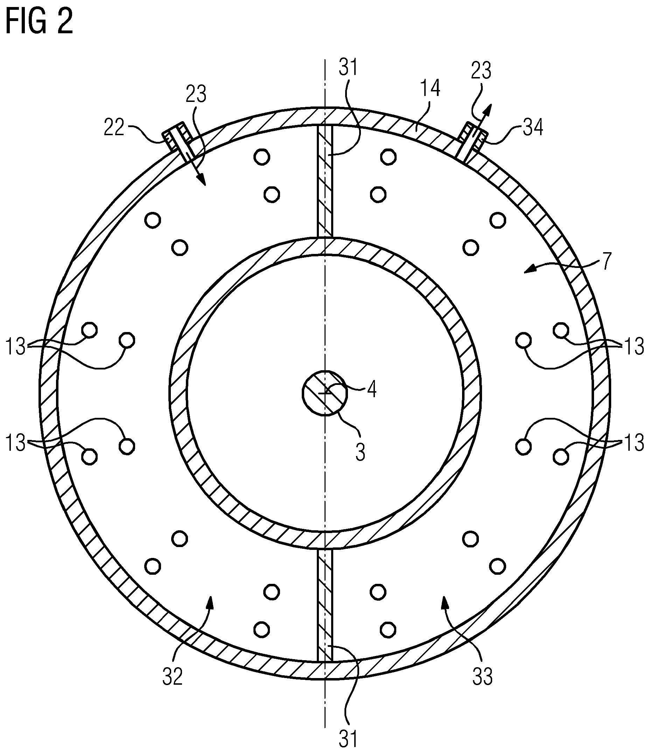

Die Rohre 13 sind entsprechend der Darstellung in FIG 2 in der Regel in Tangentialrichtung gesehen über einen Winkel von mehr als 180° um die Rotationsachse 4 herum verteilt angeordnet. Die konkret in FIG 2 dargestellte Anordnung und auch die in FIG 2 dargestellte Anzahl an Rohren 13 sind jedoch nur beispielhaft zu verstehen. In FIG 2 sind nur einige der Rohre 13 mit ihrem Bezugszeichen versehen, um FIG 2 nicht unnötig zu verfrachten. Oftmals sind die Rohre 13 in Tangentialrichtung gesehen sogar über einen Winkel von mehr als 270° um die Rotationsachse 4 herum verteilt angeordnet, manchmal sogar entsprechend der Darstellung in FIG 2 im wesentlichen rundum. In aller Regel sind die Rohre 13 weiterhin bezüglich einer vertikalen, die Rotationsachse 4 enthaltenden Ebene E im wesentlichen zu gleichen Teilen auf den beiden Seiten der Ebene E angeordnet.

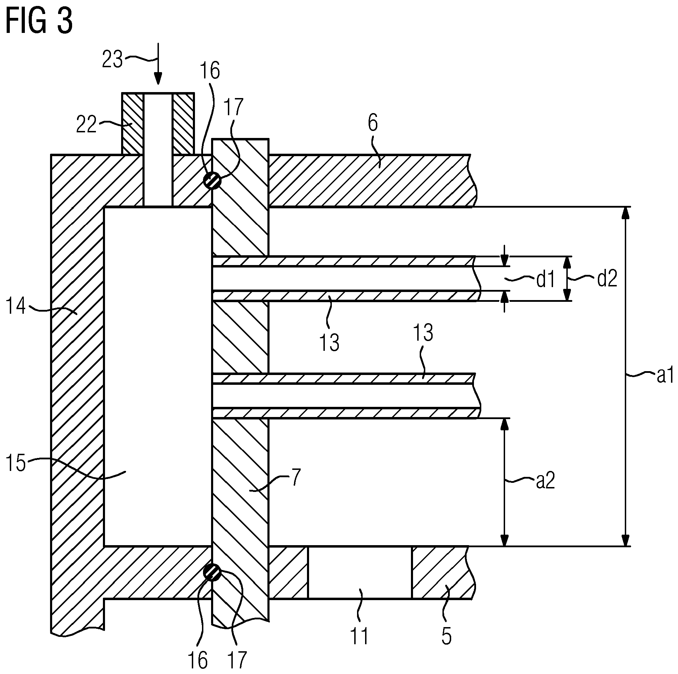

Auf das vordere Stirnteil 7 ist an seiner vom äußeren Mantel 6 abgewandten Seite - also in Axialrichtung - ein vorderes Abschlusselement 14 aufgesetzt. FIG 3 zeigt dies im Detail. Die Ausgestaltung der Verbindungsstelle zwischen dem vorderen Stirnteil 7 und dem vorderen Abschlusselement 14 ist derart, dass sich ein flüssigkeitsdichter Abschluss ergibt. Das vordere Stirnteil 7 und das vordere Abschlusselement 14 umschließen somit einen vorderen Hohlraum 15.

Zum flüssigkeitsdichten Abschluss können zwischen dem vorderen Stirnteil 7 und dem vorderen Abschlusselement 14 Dichtungselemente 16 angeordnet sein. Die Dichtungselemente 16 können beispielsweise als O-Ringe ausgebildet sein. Gegebenenfalls können das vordere Abschlusselement 14 und/oder das vordere Stirnteil 7 Vertiefungen 17 für die Dichtungselemente 16 aufweisen. Es sind aber auch andere Arten der Abdichtung möglich. Beispielsweise kann das vordere Abschlusselement 14 mit dem vorderen Stirnteil 7 geschweißt sein.

In analoger Weise ist auf das hintere Stirnteil 8 an seiner vom äußeren Mantel 6 abgewandten Seite ein hinteres Abschlusselement 18 aufgesetzt, so dass das hintere Stirnteil 8 und das hintere Abschlusselement 18 einen hinteren Hohlraum 19 umschließen. Die Ausgestaltung der Verbindungsstelle zwischen dem hinteren Stirnteil 8 und dem hinteren Abschlusselement 18 ist in der Regel analog zur Ausgestaltung der Verbindung zwischen dem vorderen Stirnteil 7 und dem vorderen Abschlusselement 14. Insbesondere können auch hier Dichtungselemente 20, gegebenenfalls einschließlich Vertiefungen 21 für die Dichtungselemente 20, vorhanden sein und ist auch hier eine Schweißung möglich.

Die Rohre 13 münden entsprechend der Darstellung in den FIG 1 und 3 in den beiden Hohlräumen 15, 19. Weiterhin weist der vordere Hohlraum 15 einen Anschluss 22 auf, über den dem vorderen Hohlraum 15 ein flüssiges Kühlmedium 23 zugeführt werden kann. Das flüssige Kühlmedium 23 ist in der Regel Wasser. In Einzelfällen kann es sich jedoch auch um ein anderes Medium handeln, beispielsweise um ein Öl. Der Anschluss 22 kann nach Bedarf angeordnet sein. In der Darstellung gemäß den FIG 1 und 3 erfolgt eine radiale Zuführung zum vorderen Hohlraum 15. Es ist jedoch ebenso auch eine axiale Zuführung zum vorderen Hohlraum 15 möglich.

Die Rohre 13 weisen entsprechend der Darstellung in FIG 3 einen Innendurchmesser d1 und einen Außendurchmesser d2 auf. Die Rohre 13 weisen weiterhin einen jeweiligen radialen Abstand a2 vom Stator 2 auf. Sofern der innere Mantel 5 vorhanden ist, wird der Abstand a2 vorzugsweise vom inneren Mantel 5 ausgehend bestimmt. Vorzugsweise ist der jeweilige radiale Abstand a2 mindestens so groß wie der Innendurchmesser d1. Noch besser ist es, wenn der jeweilige radiale Abstand a2 mindestens so groß wie der Außendurchmesser d2 ist. Dadurch wird insbesondere erreicht, dass die beiden Stirnteile 7, 8 in ihrem radial inneren Bereich zum Stator 2 hin eine hinreichend große radiale Erstreckung aufweisen, in der keine Rohre 13 angeordnet sind, so dass dort das entsprechende Abschlusselement 14, 18 - gegebenenfalls einschließlich Dichtungselement 16, 20 - angeordnet werden kann.

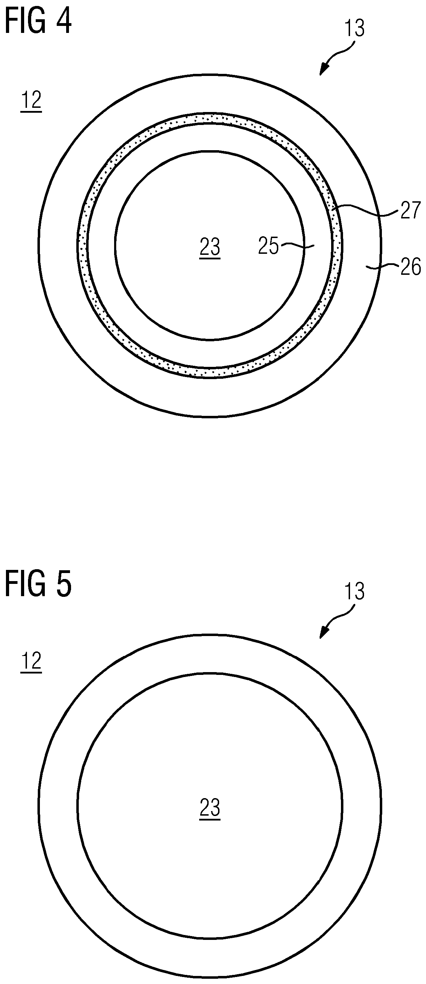

FIG 4 zeigt eine mögliche Ausgestaltung eines der Rohre 13. Für die anderen, in FIG 4 nicht dargestellten Rohre 13 gelten analoge Ausführungen.

Entsprechend der Darstellung in FIG 4 ist das Rohr 13 als doppelwandiges Rohr 13 ausgebildet. Es weist also ein inneres Innenrohr 25 und ein das Innenrohr 25 umgebendes Außenrohr 26 auf. Das Innenrohr 25 führt das flüssige Kühlmedium 23. Das Außenrohr 26 wird im Außenbereich 10 von der Luft 12 umströmt, also der Luft 12 des inneren Kühlkreislaufes. Ein Abstand des Innenrohres 25 vom Außenrohr 26 sollte so gering wie möglich sein. Gegebenenfalls kann zwischen dem Innenrohr 25 und dem Außenrohr 26 ein relativ gut wärmeleitendes Medium 27 angeordnet sein, beispielsweise ein Öl, ein Gel oder ein Klebstoff.

FIG 5 zeigt ebenfalls eine mögliche Ausgestaltung eines der Rohre 13. Diese Ausgestaltung ist alternativ zu der Ausgestaltung von FIG 4. Für die anderen, in FIG 5 nicht dargestellten Rohre 13 gelten - wie zuvor - analoge Ausführungen.

Entsprechend der Darstellung in FIG 5 ist das Rohr 13 als einwandiges Rohr 13 ausgebildet. Es führt innen das flüssige Kühlmedium 23 und wird außen von der im Außenbereich 10 strömenden Luft 12 umströmt, also der Luft 12 des inneren Kühlkreislaufes.

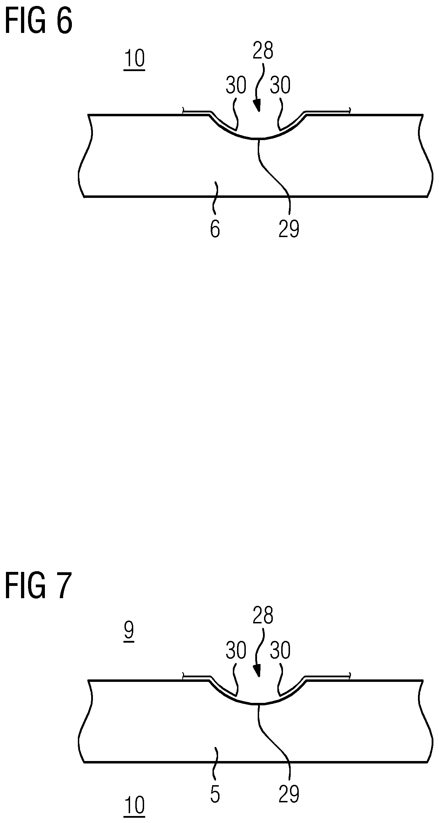

Im Falle der Ausgestaltung gemäß FIG 5 ist vorzugsweise entsprechend der Darstellung in FIG 6 im Außenbereich 10 eine Detektoreinrichtung 28 angeordnet. Die Detektoreinrichtung 28 dient dazu, zu erfassen, ob sich im Außenbereich 10 Flüssigkeit befindet, also das flüssige Kühlmedium 23. Derartige Detektoreinrichtungen 28 sind Fachleuten allgemein bekannt. Beispielsweise kann in einem relativ tiefen Bereich des äußeren Mantels 6 eine kleine Mulde 29 angeordnet sein, in der sich das flüssige Kühlmedium 23 sammeln kann, falls es aus einem der Rohre 13 austritt und damit in den Außenbereich 10 eintritt. In der Mulde 29 können als Detektoreirichtung 28 Leiterenden 30 angeordnet sein, die durch eine derartige Ansammlung des flüssigen Kühlmediums 23 leitend miteinander verbunden werden.

Eine analoge Ausgestaltung kann gemäß FIG 7 für den Innenbereich 9 ergriffen werden. Die Ausgestaltung gemäß FIG 7 kann nach Bedarf alternativ oder zusätzlich zu der Ausgestaltung gemäß FIG 6 realisiert sein.

Die Ausgestaltung gemäß den FIG 6 und/oder 7 kann prinzipiell auch mit der Ausgestaltung der Rohre 13 gemäß FIG 4 kombiniert werden. Im Falle der Ausgestaltung der Rohre 13 als doppelwandige Rohre ist dies jedoch nicht erforderlich.

Im Rahmen der vorliegenden Erfindung wird das flüssige Kühlmedium 23 dem vorderen Hohlraum 15 sowohl zugeführt als auch aus ihm abgeführt. Dies wird nachstehend in Verbindung mit FIG 2 näher erläutert.

Gemäß FIG 2 weist das vordere Abschlusselement 14 mindestens eine Trennwand 31 auf. Die Trennwand 31 kann beispielsweise entsprechend der Darstellung in FIG 2 vertikal verlaufen. Mittels der Trennwand 31 ist der vordere Hohlraum 15 in mindestens zwei Teilbereiche 32, 33 unterteilt. Ein Teil der Rohre 13 mündet im Teilbereich 32, ein anderer Teil der Rohre 13 im Teilbereich 33. Der Teilbereich 32 weist den Anschluss 22 auf, über den dem vorderen Hohlraum 15 - genauer: dem Teilbereich 32 des vorderen Hohlraums 15 - das flüssige Kühlmedium 23 zugeführt wird. Der andere Teilbereich 33 weist einen Anschluss 34 auf, über den das flüssige Kühlmedium 23 aus dem vorderen Hohlraum 15 - genauer: aus dem anderen Teilbereich 33 des vorderen Hohlraums 15 - abgeführt wird. Das flüssige Kühlmedium 23 strömt also zunächst über den Anschluss 22 in den Teilbereich 32, fließt sodann über die im Teilbereich 32 mündenden Rohre 13 in den hinteren Hohlraum 19, fließt sodann über die im Teilbereich 33 mündenden Rohre 13 wieder zurück in den Teilbereich 33 und wird von dort über den Anschluss 34 aus dem vorderen Hohlraum 15 abgeführt.

Die beiden Teilbereiche sind somit mittels der Trennwand 31 flüssigkeitsdicht voneinander getrennt sind. Weiterhin ist der vordere Hohlraum 15 - mit Ausnahme der Anschlüsse 22,24 zum Zuführen und zum Abführen des flüssigen Kühlmediums 23 und der Zugänge zu den axial verlaufenden Rohren 13 - flüssigkeitsdicht geschlossen ist. Ebenso ist der hintere Hohlraum 19 mit Ausnahme der Zugänge zu den axial verlaufenden Rohren 13 flüssigkeitsdicht geschlossen.

Zusammengefasst betrifft die vorliegende Erfindung somit folgenden Sachverhalt:
Eine elektrische Maschine weist einen Rotor 1 und einen Stator 2 auf, wobei der Rotor 2 um eine Rotationsachse 4 rotierbar ist. Der Rotor 1 ist radial außen vom Stator 2, der Stator 2 in einem radialen Abstand a1 von einem äußeren Mantel 6. Der äußere Mantel 6 erstreckt sich axial jeweils von einem vorderen Stirnteil 7 zu einem hinteren Stirnteil 8, so dass die Stirnteile 7, 8 und Stator 2 einen den Rotor 1 enthaltenden Innenbereich 9 und die Stirnteile 7, 8, der Stator 2 und der äußere Mantel 6 einen den Innenbereich 9 radial außen umgebenden Außenbereich 10 begrenzen. Der Innenbereich 9 und der Außenbereich 10 sind über Ausnehmungen 11 kommunizierend miteinander verbunden, so dass Luft 12 aus dem Innenbereich 9 in den Außenbereich 10 und von dort wieder zurück strömen kann. In den Stirnteilen 7, 8 sind axial verlaufende Rohre 13 befestigt, die sich zwischen den Stirnteilen 7, 8 im Außenbereich 10 erstrecken. Auf die Stirnteile 7, 8 ist an ihren vom äußeren Mantel 6 abgewandten Seiten flüssigkeitsdicht je ein Abschlusselement 14, 18 aufgesetzt, so dass die Stirnteile 7, 8 und die Abschlusselemente 14, 18 jeweils einen Hohlraum 15, 19 umschließen. Der vordere Hohlraum 15 ist mittels einer Trennwand 31 in mindestens zwei Teilbereiche 32,33 unterteilt. Je ein Teil der Rohre 13 mündet in dem einen oder dem anderen Teilbereich 32,33. In je einem der Teilbereiche 32,33 ist ein Anschluss 22,34 zum Zuführen bzw. Abführen des flüssigen Kühlmediums 23 angeordnet.

Die vorliegende Erfindung weist viele Vorteile auf. Insbesondere kann die Kühlung der elektrischen Maschine deutlich verbessert werden. Dadurch kann bei gleicher Baugröße und gleichem oder sogar reduziertem Gewicht die elektrische Maschine mit einer höheren Leistung betrieben werden. In Versuchen haben sich Leistungssteigerungen von ca. 25% als ohne weiteres realisierbar erwiesen. Weiterhin kann die Geräuschemission der elektrischen Maschine reduziert werden. Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den durch die Ansprüche definierten Schutzumfang der Erfindung zu verlassen.

## Patentansprüche

1. Gekapselte elektrische Maschine mit einem Luft-Innenkühlkreislauf und einem äußeren Flüssigkeitskühlkreislauf,
- wobei die elektrische Maschine einen Rotor (1) und einen Stator (2) aufweist,
- wobei der Rotor (2) um eine Rotationsachse (4) der elektrischen Maschine rotierbar ist,
- wobei um die Rotationsachse (4) herum gesehen der Rotor (1) vom Stator (2 umgeben ist und der Stator (2) mit einem radialen Abstand (a1) von einem äußeren Mantel (6) umgeben ist,
- wobei der radiale Abstand (a1) variiert,
- wobei der äußere Mantel (6) sich in Richtung der Rotationsachse (4) gesehen jeweils von einem vorderen Stirnteil (7) zu einem hinteren Stirnteil (8) erstreckt, so dass das vordere und das hintere Stirnteil (7,8) und der Stator (2) einen den Rotor (1) enthaltenden Innenbereich (9) begrenzen und das vordere und das hintere Stirnteil (7,8), der Stator (2) und der äußere Mantel (6) einen den Innenbereich (9) radial außen umgebenden Außenbereich (10) begrenzen,
- wobei der Innenbereich (9) und der Außenbereich (10) über Ausnehmungen (11) kommunizierend miteinander verbunden sind, so dass Luft (12) aus dem Innenbereich (9) in den Außenbereich (10) und von dort wieder zurück in den Innenbereich (9) strömen kann,
- wobei axial verlaufende Rohre (13) jeweils im vorderen und im hinteren Stirnteil (7,8) befestigt sind, so dass die axial verlaufenden Rohre (13) sich jeweils vom vorderen Stirnteil (7) über den Außenbereich (10) zum hinteren Stirnteil (8) erstrecken,
- wobei die axial verlaufenden Rohre um die Rotationsachse herum gesehen über einen Winkel von mehr als 180° um die Rotationsachse herum verteilt angeordnet sind,
- wobei auf das vordere und das hintere Stirnteil (7,8) an ihrer jeweils von dem äußeren Mantel (6) abgewandten Seite flüssigkeitsdicht ein vorderes und ein hinteres Abschlusselement (14,18) aufgesetzt sind, so dass das vordere Stirnteil (7) und das vordere Abschlusselement (14) einen vorderen und das hintere Stirnteil (8) und das hintere Abschlusselement (18) einen hinteren Hohlraum (15,19) umschließen,
- wobei die axial verlaufenden Rohre (13) im vorderen und hinteren Hohlraum (15,19) münden und
- wobei zumindest der vordere Hohlraum (15) einen Anschluss (22) zum Zuführen eines flüssigen Kühlmediums (23) aufweist
**dadurch gekennzeichnet, dass** das vordere und das hintere Stirnteil (7,8) und der äußere Mantel (6) den Rotor (1) und den Stator (2) in der Zündschutzart Ex d kapseln.

2. Elektrische Maschine nach Anspruch 1, **dadurch gekennzeichnet, dass** der hintere Hohlraum (18) einen Anschluss (24) zum Abführen des flüssigen Kühlmediums (23) aufweist.

3. Elektrische Maschine nach Anspruch 1, **dadurch gekennzeichnet, dass** der vordere Hohlraum (15) in mindestens zwei Teilbereiche (32,33) unterteilt ist, so dass ein Teil der axial verlaufenden Rohre (13) im einem der Teilbereiche (32,33) und ein anderer Teil der axial verlaufenden Rohre (13) in einem anderen der Teilbereiche (32,33) mündet, dass der Anschluss (22) zum Zuführen des flüssigen Kühlmediums (23) in dem einen Teilbereich (32) angeordnet ist und dass in dem anderen Teilbereich (33) ein Anschluss (34) zum Abführen des flüssigen Kühlmediums (23) aus dem vorderen Hohlraum (15) angeordnet ist.

4. Elektrische Maschine nach einem der obigen Ansprüche,
**dadurch gekennzeichnet, dass** die axial verlaufenden Rohre (13) einen Innendurchmesser (d1) und einen Außendurchmesser (d2) aufweisen und dass die axial verlaufenden Rohre (13) vom Stator (2) einen jeweiligen radialen Abstand (a2) aufweisen, der mindestens so groß wie der Innendurchmesser (d1) ist.

5. Elektrische Maschine nach Anspruch 4, **dadurch gekennzeichnet, dass** der jeweilige Abstand (a2) der axial verlaufenden Rohre (13) vom Stator (2) mindestens so groß wie der Außendurchmesser (d2) ist.

6. Elektrische Maschine nach einem der Ansprüche 1 bis 5,
**dadurch gekennzeichnet, dass** die axial verlaufenden Rohre (13) als doppelwandige Rohre ausgebildet sind, die jeweils ein inneres, das flüssige Kühlmedium (23) führendes Innenrohr (25) und ein das Innenrohr (25) umgebendes und von der im Außenbereich (10) strömenden Luft (12) umströmtes Außenrohr (26) aufweisen.

7. Elektrische Maschine nach einem der Ansprüche 1 bis 5,
**dadurch gekennzeichnet, dass** die axial verlaufenden Rohre (13) als einwandige Rohre ausgebildet sind, die innen das flüssige Kühlmedium (23) führen und außen von der im Außenbereich (10) strömenden Luft (12) umströmt werden.

8. Elektrische Maschine nach Anspruch 6 oder 7, **da-**d**urch gekennzeichnet**, dass im Innenbereich (9) und/oder im Außenbereich (10) eine Detektoreinrichtung (28) zum Erfassen von Flüssigkeit angeordnet ist.

9. Elektrische Maschine nach einem der obigen Ansprüche,
**dadurch gekennzeichnet, dass** die axial verlaufenden Rohre (13) um die Rotationsachse (4) herum gesehen über einen Winkel von mehr als 180° um die Rotationsachse (4) herum verteilt angeordnet sind.

10. Elektrische Maschine nach einem der obigen Ansprüche,
**dadurch gekennzeichnet, dass** der Stator (2) ohne Abstand von einem inneren Mantel (5) umgeben ist und dass der innere Mantel (5) einen radialen Abstand vom äußeren Mantel (6) aufweist.

## Claims

1. An encapsulated electric machine having an air internal cooling circuit and an external liquid cooling circuit, wherein the electric machine includes a rotor (1) and a stator (2),
- wherein the rotor (2) is rotatable about an axis of rotation (4) of the electric machine,
- wherein, when viewed around the axis of rotation (4), the rotor (1) is surrounded by the stator (2), and the stator (2) is surrounded by an outer sheath (6) at a radial distance (a1),
- wherein the radial distance (a1) varies,
- wherein the outer sheath (6) extends, as viewed in the direction of the axis of rotation (4), in each case from a front end part (7) to a rear end part (8), such that the front and the rear end part (7, 8) and the stator (2) delimit an interior region (9) containing the rotor (1), and the front and the rear end part (7, 8), the stator (2), and the outer sheath (6) delimit an exterior region (10) radially surrounding the interior region (9),
- wherein the interior region (9) and the exterior region (10) are communicatively connected to each other via recesses (11) such that air (12) can flow from the interior region (9) into the exterior region (10) and from there back to the interior region (9),
- wherein axially extending tubes (13) are respectively fastened in the front and the rear end part (7, 8), such that the axially extending tubes (13) each extend from the front end part (7) via the exterior region (10) to the rear end part (8),
- wherein the axially extending tubes are arranged distributed around the axis of rotation over an angle of more than 180°, as viewed around the axis of rotation,
- wherein, on the respective side of the front and the rear end part (7, 8) facing away from the outer sheath (6), a front and a rear closing element (14, 18) are mounted in a fluid-tight manner, such that the front end part (7) and the front closing element (14) enclose a
front cavity and the rear end part (8) and the closing element (18) surround a rear cavity (15, 19),
- wherein the axially extending tubes (13) open in the front and rear cavity (15, 19), and
- wherein at least the front cavity (15) comprises a port (22) for supplying a liquid cooling medium (23)
**characterized in that**
the front and the rear end part (7, 8) and the outer sheath (6) encapsulate the rotor (1) and the stator (2) in the Ex d type of protection.

2. An electrical machine according to claim 1, **characterized in that** the rear cavity (18) comprises a port (24) for discharging the liquid cooling medium (23).

3. An electrical machine according to claim 1, **characterized in that** the front cavity (15) is divided into at least two sub-areas (32, 33) such that a part of the axially extending tubes (13) opens into one of the sub-areas (32, 33) and another part of the axially extending tubes (13) opens into another of the sub-areas (32, 33), that the port (22) for supplying the liquid cooling medium (23) is arranged in the one sub-area (32), and that a port (34) for discharging the liquid cooling medium (23) from the front cavity (15) is arranged in the other sub-area (33).

4. An electrical machine according to any preceding claim, **characterized in that** the axially extending tubes (13) have an inner diameter (d1) and an outer diameter (d2) and **in that** the axially extending tubes (13) have, from the stator (2), a respective radial distance (a2) that is at least as large as the inner diameter (d1).

5. An electrical machine according to claim 4, **characterized in that** the respective distance (a2) of the axially extending tubes (13) from the stator (2) is at least as large as the outer diameter (d2).

6. The electrical machine according to any one of claims 1 to 5, **characterized in that** the axially extending tubes (13) are embodied as double-walled tubes comprising an inner tube (25) guiding the liquid cooling medium (23) and an outer tube (26) surrounding the inner tube (25) and being flowed around by the air (12) flowing in the exterior region (10).

7. The electrical machine according to any one of claims 1 to 5, **characterized in that** the axially extending tubes (13) are embodied as single-walled tubes that guide the liquid cooling medium (23) on the inside and are flowed around on the outside by the air (12) flowing in the exterior region (10).

8. The electrical machine according to claim 6 or 7, **characterized in that** a detector device (28) for sensing liquid is arranged in the interior area (9) and/or in the exterior area (10).

9. The electrical machine according to any of the above claims, **characterized in that** the axially extending tubes (13) are arranged distributed around the axis of rotation (4), as viewed around the axis of rotation (4), over an angle of more than 180°.

10. The electrical machine according to any one of the above claims, **characterized in that** the stator (2) is surrounded by an inner sheath (5) without any gap and that the inner sheath (5) has a radial distance from the outer sheath (6).

## Revendications

1. Machine électrique encapsulée avec un circuit de refroidissement interne à air et un circuit de refroidissement externe à liquide, - la machine électrique comportant un rotor (1) et un stator (2),
- dans laquelle le rotor (2) peut tourner autour d'un axe de rotation (4) de la machine électrique,
- dans laquelle, vu autour de l'axe de rotation (4), le rotor (1) est entouré par le stator (2) et le stator (2) est entouré, à une distance radiale (al), par une enveloppe extérieure (6),
- dans laquelle l'écart radial (al) varie,
- dans laquelle la gaine extérieure (6) s'étend, vue dans le sens de l'axe de rotation (4), d'une partie frontale avant (7) à une partie frontale arrière (8), de sorte que la partie frontale avant et la partie frontale arrière (7, 8) et le stator (2) délimitent une zone intérieure (9) contenant le rotor (1) et que la partie frontale avant et la partie frontale arrière (7, 8), le stator (2) et la gaine extérieure (6) délimitent une zone extérieure (10) entourant radialement la zone intérieure (9) à l'extérieur,
- dans laquelle la zone intérieure (9) et la zone extérieure (10) sont reliées entre elles de manière communicante par des évidements (11), de sorte que l'air (12) peut circuler de la zone intérieure (9) vers la zone extérieure (10) et de là à nouveau vers la zone intérieure (9),
- dans laquelle des tubes axiaux (13) sont fixés respectivement dans la partie frontale avant et dans la partie frontale arrière (7, 8), de sorte que les tubes axiaux (13) s'étendent respectivement de la partie frontale avant (7) à la partie frontale arrière (8) en passant par la zone extérieure (10),
- dans laquelle les tubes axiaux sont répartis autour de l'axe de rotation sur un angle de plus de 180° vu autour de l'axe de rotation,
- dans laquelle un élément d'extrémité avant et un élément d'extrémité arrière (14, 18) sont placés de manière étanche aux liquides sur la partie frontale avant et la partie frontale arrière (7, 8) sur leur côté respectif opposé à la gaine extérieure (6), de sorte que la partie frontale avant (7) et l'élément d'extrémité avant (14)
entourent une cavité avant et la partie frontale arrière (8) et l'élément d'extrémité arrière (18) entourent une cavité arrière (15,19),
- dans laquelle les tubes axiaux (13) débouchent dans la cavité avant et la cavité arrière (15, 19) et
- dans laquelle au moins la cavité avant (15) présente un raccord (22) pour l'alimentation en fluide de refroidissement liquide (23)
**caractérisée en ce que**
la partie frontale avant et la partie frontale arrière (7,8) et l'enveloppe extérieure (6) encapsulent le rotor (1) et le stator (2) selon le type de protection Ex d.

2. Machine électrique selon la revendication 1, **caractérisée en ce que** la cavité arrière (18) présente un raccord (24) pour l'évacuation du fluide de refroidissement liquide (23).

3. Machine électrique selon la revendication 1, **caractérisée en ce que** la cavité avant (15) est divisée en au moins deux zones partielles (32,33), de sorte qu'une partie des tubes axiaux (13) débouche dans l'une des zones partielles (32,33) et une autre partie des tubes axiaux (13) débouche dans l'autre des zones partielles (32,33), **en ce que** le raccord (22) pour l'alimentation en fluide de refroidissement liquide (23) est disposé dans l'une des zones partielles (32) et **en ce que**, dans l'autre zone partielle (33), un raccord (34) est disposé pour l'évacuation du fluide de refroidissement liquide (23) de la cavité avant (15).

4. Machine électrique selon l'une des revendications précédentes, **caractérisée en ce que** les tubes axiaux (13) ont un diamètre intérieur (d1) et un diamètre extérieur (d2) et **en ce que** les tubes axiaux (13) présentent chacun une distance radiale (a2) par rapport au stator (2) qui est au moins égale au diamètre intérieur (d1).

5. Machine électrique selon la revendication 4, **caractérisée en ce que** la distance respective (a2) des tubes axiaux (13) par rapport au stator (2) est au moins égale au diamètre extérieur (d2).

6. Machine électrique selon l'une des revendications 1 à 5, **caractérisée en ce que** les tubes axiaux (13) sont conçus comme des tubes à double paroi, qui présentent chacun un tube intérieur (25) conduisant le fluide de refroidissement liquide (23) et un tube extérieur (26) entourant le tube intérieur (25) et entouré par l'air (12) circulant dans la zone extérieure (10).

7. Machine électrique selon l'une des revendications 1 à 5, **caractérisée en ce que** les tubes axiaux (13) sont conçus comme des tubes à paroi simple qui conduisent à l'intérieur le fluide de refroidissement liquide (23) et sont entourés à l'extérieur par l'air (12) circulant dans la zone extérieure (10).

8. Machine électrique selon la revendication 6 ou 7, **caractérisée en ce qu'**un dispositif de détection (28) pour détecter la présence de liquide est disposé dans la zone intérieure (9) et/ou dans la zone extérieure (10).

9. Machine électrique selon l'une des revendications précédentes, **caractérisée en ce que** les tubes axiaux (13) sont disposés de manière répartie autour de l'axe de rotation (4), vus autour de l'axe de rotation (4), sur un angle supérieur à 180°.

10. Machine électrique selon l'une des revendications précédentes, **caractérisée en ce que** le stator (2) est entouré sans espace par une enveloppe intérieure (5) et **en ce que** l'enveloppe intérieure (5) présente un espace radial par rapport à l'enveloppe extérieure (6).
